# EUROPEAN PATENT APPLICATION

(11) **EP 1 017 247 A2**
(43) Date of publication of application: **05.07.2000**
(21) Application number: 99310122.9
(22) Date of filing: 15.12.1999
(51) Int. Cl.: H04Q 11/04

(54) **Multi-port, single-line subscriber terminal**

(30) Priority: 28.12.1998 US 220999
(71) Applicant: ECI TELECOM LTD., Petach Tikva 49133 (IL)
(72) Inventor: Tal, Sarel, Herzlia 46661 (IL); Leshed, Amir, Hod Hasharon 45292 (IL); Aharoni, Zhana, Rishon Lezion 75203 (IL)
(74) Representative: Potter, Julian Mark

(57) **Abstract**

A subscriber terminal, for connecting a device of a user to a telephony network, includes at least two ports associated with a single subscriber line of the telephony network, each port for communication at a different rate. The rate of communication, and hence the bandwidth allocated to the user by a wireless network, is determined by which port is chosen explicitly by the user for connection to the device. The subscriber terminal includes a mechanism for identifying which port has been chosen by the user and for connecting the chosen port to the telecommunication network at appropriate bandwidth.

## Description

The present invention relates to telephony and, more particularly, but not exclusively, to a subscriber terminal for bandwidth-limited telephony systems such as wireless local loop networks, that allows the selection of an optimal rate of communication across a single subscriber line.

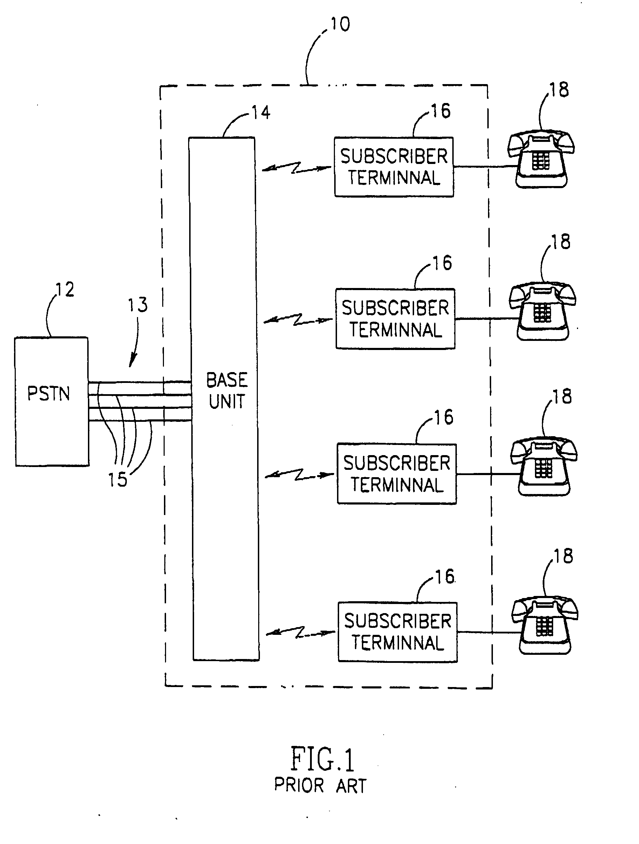

In many third-world countries, the PSTN (Public Switched Telephone Network) infrastructure is inadequate for the needs of many users. For example, remote regions of these countries typically lack telephone lines. To address the need for better telecommunication in such remote areas, WLL (Wireless Local Loop) networks have been introduced. Figure 1 is a greatly simplified diagram of a WLL network 10. A base unit 14 is connected to the PSTN 12 by a conventional wire line 13. Wire line 13 is drawn in Figure 1 as four horizontal lines 15 to indicate that PSTN 12 assigns a different subscriber line 15, via wire line 13, to each of the four subscriber terminals 16 that are shown in Figure 1. Usually, only one subscriber line 15 is assigned per subscriber terminal 16, as shown; but more than one subscriber line 15 may be assigned to a particular subscriber terminal 16. Base unit 14 functions analogously to a cellular network base station, to communicate by radio with a plurality of subscriber terminals 16. Each subscriber terminal supports, and is connected by wire to, one or more user communication devices 18 which are illustrated in Figure 1 as telephone sets. Telephone sets are most commonly used as communication devices 18; but any device that can be plugged directly into PSTN 12, for example, a fax machine or a modem, can be connected to a subscriber terminal 16. Ideally, WLL 10 is transparent to the users: for all they know, devices 18 could be connected directly to PSTN 12.

The number of users that can be supported by WLL network 10 is limited by the available radio bandwidth. This bandwidth is a scarce resource that typically is allocated by government ministries of communications. Digital compression of voice for telephony is well-known in the art. The standard encoding used is PCM (Pulse Code Modulation), which requires 64Kbps for voice. Another will-known technique is ADPCM (Adaptive Differential Pulse Code Modulation), which further reduces the required bandwidth to 32Kbps, but limits the ability to carry voice band data at higher rates. See, for example, John Bellamy, Digital Telephony, second edition (Wiley, 1991), Chapter 3.

Typically, a single user desires both voice communication and sporadic digital data exchange (e.g., Internet access). Assigning a 64Kbps channel to such a user is an inefficient allocation of scarce bandwidth, because most of the time, the user needs only 32Kbps. This problem has been addressed by several providers of WLL services, notably Siemens AG of Munich, Germany and Alcatel Telecom of Antwerp, Belgium. In both the Siemens DECTlink Version 3 system and the Alcatel 9800 system, subscriber terminal 16 detects, based on the presence or absence of modem tones at the port to which user device 18 is connected, whether voice or data communication is desired, and signals base station 14 to allocate either 32Kbps or 64Kbps for the communication session accordingly. The Siemens technology is described in PCT applications WO 98/18277 and WO 98/18285, both of which documents are incorporated by reference for all purposes as if fully set forth herein. Alcatel also provides a subscriber terminal 18 that includes an analog port for voice communications on one line and a digital port for packet mode data communications on a second line. To support the two lines of this subscriber terminal 18, two separate subscriber lines 15 must be allocated to the user in PSTN 12, and the second subscriber line 15 may only be used for packet mode data.

The automatic, adaptive solutions of Siemens and Alcatel require more sophisticated technology. It would be highly advantageous to have a simpler system that achieves the same end result of efficient bandwidth allocation in WLL networks.

According to a first aspect of the present invention, there is provided a subscriber terminal for connecting a device of a user to a telecommunication network, including: (a) a plurality of analog ports; and (b) a mechanism for selecting a single one of the ports for connection to a single subscriber line of the telephony network.

According to a second aspect of the present invention, there is provided, in a communications system wherein at least one channel is allocated to a device of a user, a method of allocating the at least one channel, including the steps of: (a) providing to the user a subscriber terminal including: (i) a low speed port, and (ii) a high speed port; (b) establishing an operational connection between the device and only a first of the ports for an outgoing call; (c) activating only the first port; and (d) if the activated port is the low speed analog port, allocating one channel to the device.

According to a third aspect of the present invention, there is provided a communications system including: (a) a subscriber terminal including two ports; and (b) a base unit for allocating at least one of the channels to the subscriber terminal for a first communication session via one of the ports.

The basic concept of the present teaching is to allow the user to select the bandwidth. A subscriber terminal in accordance with one embodiment of the present invention is provided with a set of two or more ports associated with each subscriber line 15 of PSTN 12 that is serviced by the subscriber terminal, each one of the two or more ports supporting communication on the associated single PSTN subscriber line 15 at a different rate. The user selects the communication rate, and hence the communication bandwidth, by plugging device 18 into the desired port and activating device 18 to establish an operational connection between device 18 and the desired port for an outgoing call. For example, if device 18 is a telephone, the user lifts the telephone receiver; or if device 18 is a computer connected to the port via a modem, the user activates the appropriate communications software. The subscriber terminal is provided with a mechanism for activating the desired port, *i.e.*, connecting only the desired port to the associated PSTN subscriber line 15. Most simply, this mechanism may be considered as a switch that is set automatically to comply with the user's bandwidth requirement. Alternatively, the mechanism is adapted to identify to which of the ports, an active device 18 is plugged into, for example by sensing an off-hook condition at the port. A circuits-busy condition ("busy signal") is indicated at the other ports to preclude interference from other devices 18 that are plugged into the other ports and are subsequently activated. The mechanism then coordinates the bandwidth associated with the selected port, with base unit 14 in the conventional manner.

Base Unit 14 allocates one or more channels to the selected port. Once a certain number of channels has been selected, that number of channels is used for the entire duration of the communication session via the selected port. For example, if only one 32Kbps channel has been allocated to a port that supports voice-band data exchange at 64Kbps because at the time the communication session was established only one channel was available, then that one channel is used for the duration of the communication session even if a second channel becomes available during the course of the communication session.

The simplest preferred embodiment of a subscriber terminal of the present invention has two analog ports a high speed port and a low speed port, for communication, alternately at two different rates and two different associated bandwidths, via only a single PSTN subscriber line 15. In a typical configuration, the low speed port supports voice communication at a rate of 32Kbps and the high speed port supports voice-band data communication at a rate of 64Kbps. The mechanism for connecting the desired port to the PSTN subscriber line 15 requests base unit 14 to allocate either a 32Kbps channel or a 64Kbps channel to subscriber terminal 16, depending on whether the low speed port or the high speed port is selected. If only a 32Kbps channel is available, base unit 14 allocates only that channel to subscriber terminal 16, no matter which port is selected.

The low speed port supports both incoming calls and outgoing calls. According to one preferred embodiment of the present invention, the high speed port, which is intended primarily for internet access, supports only outgoing calls. Incoming calls are directed by base unit 14 only to the low speed port. According to another preferred embodiment of the present invention, both ports support incoming calls, but only at a rate of 32Kbps, with one 32Kbps channel allocated to each port.

Although the primary application of the present invention is to WLL networks, it will be appreciated that the present invention alternatively can be used, with appropriate modifications that will be obvious to those skilled in the art, in conjunction with hardwired telephony networks.

Embodiments in accordance with the invention are herein described, by way of example only, with reference to the accompanying drawings, wherein:
Figure 1 (prior art) is a simplified diagram of a WLL network; and
Figure 2 is a high level block diagram of a subscriber terminal of the present invention, in relation to user devices.

An embodiment of the present invention is a subscriber terminal which enables efficient WLL bandwidth allocation in a simple manner than that known in the prior art.

The principles and operation of a subscriber terminal in accordance with an embodiment of the present invention may be better understood with reference to the drawings and the accompanying description.

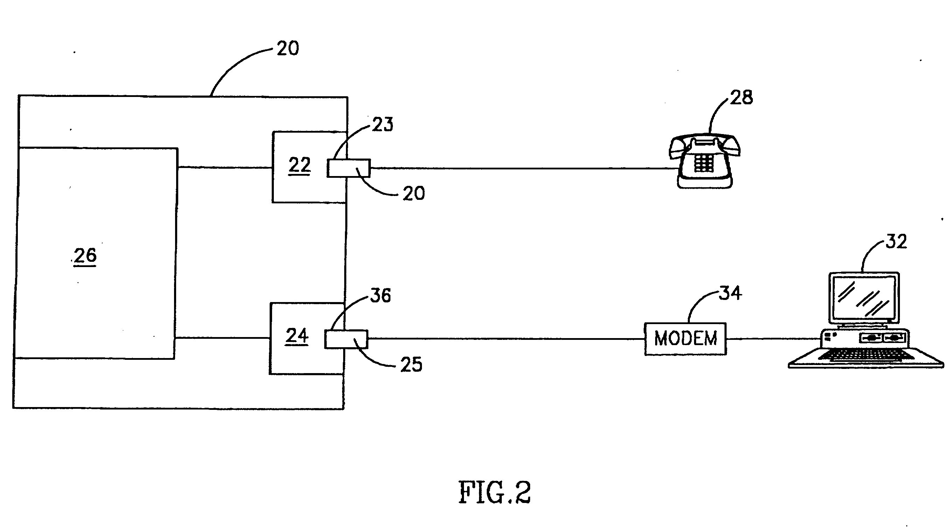

Referring again to the drawings, Figure 2 is a high level block diagram of a subscriber terminal 20 in accordance with an embodiment of the present invention, intended to facilitate communication with PSTN network 12 via base unit 14 using either a telephone set 28 at a rate of 32 Kbps or a personal computer 32 at a rate of 64Kbps. Subscriber terminal 20 includes a 32Kbps analog port 22 and a 64Kbps analog port 24. Both ports 22 and 24 are connected to circuitry 26 whose function is described below. Telephone set 28 is provided with a jack 30 that plugs into a socket 23 of port 22. Personal computer 32 is connected to a modem 34 that is provided with a jack 36 that plugs into a socket 25 of port 24.

Circuitry 26 is based on a SLIC (Subscriber Line Interface Circuit) chip, such as the Lucent L7554 manufactured by Lucent Technologies of Murray Hill, NJ. Among the operational capabilities of an SLIC chip are the sensing of an on-hook condition at either of ports 22 and 24 and the generation of a circuits-busy signal at either of ports 22 and 24.

According to a first preferred embodiment of the present invention, when telephone 28 is activated by the user for an outgoing call, circuitry 26 identifies the consequent off-hook condition at port 22 and generates a circuits-busy signal at port 24 to prevent communication by computer 32 and modem 34 via port 24. Circuitry 26 also signals base unit 14 to allocate two 32Kbps channels for the use of telephone 28.

When computer 32 and modem 34 are activated by the user for voice-band data communication, circuitry 26 identifies the consequent off-hook condition at port 24 and generates a circuit-busy signal at port 22 to prevent an attempt to use telephone 28 to communicate via port 32. Circuitry 26 also signals base unit 14 to allocate two 32Kbps channels for the use of computer 32 and modem 34. If only one 32Kbps channel is available to base unit 14, only one 32Kbps channel is allocated. Note that this single 32Kbps channel is used for the entire communication session, even if another 32Kbps channel becomes available during the communication session.

In this first preferred embodiment of the present invention, port 24 is intended primarily for Internet access and so supports only outgoing calls. An incoming call from PSTN 12 is allocated a single 32Kbps channel by base unit 14 and is directed to port 22.

In an alternative embodiment of the present invention, base unit 14 always allocates two 32Kbps channels per subscriber terminal 20, and PSTN 12 supplies two subscriber lines 15 to base unit 14 per subscriber terminal 20. An incoming call from PSTN 12 is allocated to one of these two 32Kbps channels and is directed either to port 22 or to port 24, depending on which of the two subscriber lines 15 the incoming call is on. Thus, telephone 28 and computer 32 can receive simultaneous incoming calls. Furthermore, when telephone 28 is activated by the user for an outgoing call, circuitry 26 identifies the consequent off-hook condition at port 22 and signals base unit 14 to allocate one of the two 32Kbps channels for the use of telephone 28 via one of the two subscriber lines 15 to PSTN 12, but circuitry 26 does not generate a circuits-busy signal, either at port 24 or on the other of the two subscriber lines 15 to PSTN 12, so that port 24 can be used to direct an incoming call, via the other 32Kbps channel, to computer 32, or, computer 32 can use port 24 to make an outgoing call via the available 32Kbps channel.

As in the first preferred embodiment of the present invention, when computer 32 and modem 34 are activated by the user for voice-band data communication, circuitry 26 identifies the consequent off-hook condition at port 24 and signals base unit 14 to allocate both 32Kbps channels for the use of computer 32 and modem 34. Because no 32Kbps channels are available for the use of telephone 28, circuitry 26 also generates a circuits-busy signal at port 22 to prevent an attempt to use telephone 28 to communicate via port 22, and base unit 14 signals PSTN 12 that the subscriber line 15 associated with port 22 is off-hook so as not to pass a call.

It is to be understood that the above description only includes some embodiments of the invention and serves for its illustration. Numerous other variations, modifications and other applications of the present invention may be devised by a person skilled in the art without departing from the scope of the invention, and are thus encompassed by the present invention.

The scope of the present disclosure includes any novel feature or combination of features disclosed therein either explicitly or implicitly or any generalisation thereof irrespective of whether or not it relates to the claimed invention or mitigates any or all of the problems addressed by the present invention. The applicant hereby gives notice that new claims may be formulated to such features during the prosecution of this application or of any such further application derived therefrom. In particular, with reference to the appended claims, features from dependent claims may be combined with those of the independent claims and features from respective independent claims may be combined in any appropriate manner and not merely in the specific combinations enumerated in the claims.

## Claims

1. A subscriber terminal for connecting a device of a user to a telecommunication network, comprising:
(a) a plurality of analog ports; and
(b) a mechanism for selecting a single one of said ports for connection to a single subscriber line of the telecommunication network.

2. The subscriber terminal of claim 1, wherein a first of said analog ports is a low speed port supporting communication a t a certain rate, and wherein a second of said analog ports is a high speed port, said high speed port supporting communication at a rate higher than said rate of said low speed port.

3. The subscriber terminal of claim 2, wherein said rate of said high speed port is at least about twice said rate of said low speed port.

4. The subscriber terminal of claim 3, wherein said rate of said low speed port is at most about 32Kbps and wherein said rate of said high speed port is at least about 64Kbps.

5. The subscriber terminal of any preceding claim, wherein a first of said analog ports supports both incoming calls and outgoing calls, and wherein a second of said analog ports supports only outgoing calls.

6. The subscriber terminal of any preceding claim, wherein said mechanism is operative to recognize an active one of said analog ports and to connect said active port to said single subscriber line of the telecommunication network.

7. The subscriber terminal of claim 6, wherein said recognition of said active analog port is based on a detection of an off-hook condition at said active analog port.

8. The subscriber terminal of any preceding claim, wherein said mechanism includes a switch operated manually by the user to connect said single one of said ports to said single subscriber line of the telecommunication network.

9. In a communications system wherein at least one channel is allocated to a device of a user, a method of allocating the at least one channel, comprising the steps of:
a. providing to the user a subscriber terminal including:
(i) a low speed port, and
(ii) a high speed port;
b. establishing an operational connection between the device and only a first of said ports for an outgoing call;
c. activating only said first port; and
d. if said activated port is said low speed analog port, allocating one channel to the device.

10. The method of claim 9, wherein both said low speed port and said high speed port are analog ports.

11. The method of claim 9 or 10, wherein, if said activated port is said low speed port, only one channel is allocated to the device.

12. The method of any one of claims 9 to 11, further comprising the step of:
e. if said activated port is said high speed port:
(i) if at least two channels are available for allocation to the device, allocating two of said at least two channels to the device, and
(ii) if only one channel is available for allocation to the device, allocating said only one channel to the device.

13. The method of any one of claims 9 to 12, wherein said low speed port supports communication at a first rate, and wherein said high speed port supports communication at a rate at least about twice said first rate.

14. The method of claim 13, wherein said rate of said low speed port is at most about 32 Kbps and wherein said rate of said high speed port is at least about 64 Kbps.

15. The method of any one of claims 9 to 14, further comprising the step of:
f. directing incoming calls only to said low speed port.

16. The method of any one of claims 9 to 15, wherein said activating only of said first port is effected by steps including identifying an off-hook condition at said first port.

17. The method of any one of claims 9 to 16, wherein said activating only of said first port is effected by a circuits-busy condition at a second of said ports.

18. A communications system comprising:
a. a subscriber terminal including two ports; and
b. a base unit for allocating a first number of channels to said subscriber terminal for a first communication session via one of said ports.

19. The communications system of claim 18, adapted to allocate said first number of channels for an entire duration of said first communication session.

20. The communications system of claim 18 or 19, wherein both of said ports are analog ports.

21. The communications system of any one of claims 18 to 20, wherein said subscriber terminal includes circuitry operative to identify an off-hook condition at one of said ports, said one port whereat said off-hook condition is identified then being said one port whereto said first number of channels is allocated.

22. The communication system of claim 21, wherein said circuitry is operative to indicate a circuits-busy condition at another of said ports.

23. The communication system of any one of claim 18 to 22, wherein said base unit allocates only one of said channels to said one port.

24. The communication system of claim 23, wherein said base unit is operative to determine the number of channels available for said first communication session via said one port, and:
(i) if two said channels are available, said base unit allocates both said channels, and
(ii) if only one said channel is available, said base unit allocates said only said one channel.

25. The communications system of claim 23, wherein said base unit is operative to allocate a second number of said channels to said subscriber terminal for a second communication session via another of said ports and at least partly simultaneous with said first communication session.

26. The communications system of any one of claims 18 to 25, further comprising:
(c) a telecommunication network; and
(d) a single first subscriber line, from said telecommunication network to said base unit, for said first communications session.

27. The communications system of claim 26, further comprising:
(e) a single second subscriber line, from said telephony network to said base unit, for a second communication session;
said base unit being operative to allocate a second number of said channels to said subscriber terminal for a second communication session via another of said ports an at least partly simultaneous with said first communication session.
